# EUROPEAN PATENT APPLICATION

(11) **EP 4 425 969 A1**
(43) Date of publication of application: **04.09.2024**
(21) Application number: 21962512.6
(22) Date of filing: 29.10.2021
(51) Int. Cl.: H04W 4/06, H04W 76/27, H04W 76/40, H04W 48/10

(54) **TERMINAL, BASE STATION, AND WIRELESS COMMUNICATION METHOD**

(71) Applicant: NTT DOCOMO, INC., Tokyo 100-6150 (JP)
(72) Inventor: MATSUMURA Yuki, Tokyo 100-6150 (JP); YOSHIOKA Shohei, Tokyo 100-6150 (JP); HARADA Hiroki, Tokyo 100-6150 (JP); NAGATA Satoshi, Tokyo 100-6150 (JP)
(74) Representative: Hoffmann Eitle
(86) International application number: PCT/JP2021/040178
(87) International publication number: WO 2023/073973

(57) **Abstract**

A terminal includes a reception unit that receives a sequence regarding data delivery to a plurality of terminals, and a control unit that generates, when a specific condition is satisfied, on the basis of a specific parameter included in broadcast information, a specific sequence to be applied to the sequence.

## Description

### Technical Field

The present disclosure relates to a terminal, a base station, and a radio communication method, supporting multicast/broadcast services.

### Background Art

The 3rd Generation Partnership Project (3GPP) has prepared a specification for the 5th generation mobile communication system (also called 5G, New Radio (NR), or Next Generation (NG)) and is also preparing next generation specifications called Beyond 5G, 5G Evolution, or 6G.

3GPP Release-17 covers simultaneous data transmission (may also be called delivery) services (called MBS: multicast and broadcast services (tentative name)) to specific or unspecific terminals (user equipment, UE) in NR (Non-Patent Literature 1).

The MBS supports data transmission to multiple UEs in an RRC (radio resource control) idle or RRC inactive state. In such a case, multiple UEs in an RRC idle or RRC inactive state generate a specific sequence to be applied to various sequences regarding MBS on the basis of a specific parameter.

### Citation List

### Non-Patent Literature

Non-Patent Literature 1: "New Work Item on NR support of Multicast and Broadcast Services", RP-193248, 3GPP TSG RAN Meeting #86, 3GPP, December 2019

### Summary of the Invention

Against this background, the inventors have found, as a result of diligent studies, the need for clarification on how multiple UEs in an RRC idle or RRC inactive state obtain a specific parameter.

Accordingly, the present disclosure has been made in view of this situation and an object thereof is to provide a terminal, a base station, and a radio communication method capable of appropriately specifying various sequences regarding MBS.

One aspect of the disclosure is a terminal including a reception unit that receives a sequence regarding data delivery to a plurality of terminals, and a control unit that generates, when a specific condition is satisfied, on the basis of a specific parameter included in broadcast information, a specific sequence to be applied to the sequence.

One aspect of the disclosure is a base station including a transmission unit that transmits a sequence regarding data delivery to a plurality of terminals, and a control unit that assumes that a specific sequence to be applied to the sequence is generated, when a specific condition is satisfied, on the basis of a specific parameter included in broadcast information, at each of the plurality of terminals.

One aspect of the disclosure is a radio communication system including a terminal and a base station, wherein the terminal includes a reception unit that receives a sequence regarding data delivery to a plurality of terminals, and a control unit that generates, when a specific condition is satisfied, on the basis of a specific parameter included in broadcast information, a specific sequence to be applied to the sequence.

One aspect of the disclosure is a radio communication method including a step of receiving a sequence regarding data delivery to a plurality of terminals, and a step of generating, when a specific condition is satisfied, on the basis of a specific parameter included in broadcast information, a specific sequence to be applied to the sequence.

### Brief Description of Drawings

[FIG. 1] FIG. 1 is an overall schematic configuration diagram of a radio communication system 10.
[FIG. 2] FIG. 2 is a diagram illustrating frequency ranges used in the radio communication system 10.
[FIG. 3] FIG. 3 is a diagram illustrating a configuration example of a radio frame, subframes, and slots used in the radio communication system 10.
[FIG. 4] FIG. 4 is a functional block configuration diagram of a UE 200.
[FIG. 5] FIG. 5 is a functional block configuration diagram of a gNB 100.
[FIG. 6] FIG. 6 is a diagram illustrating configuration examples of a PTM transmission scheme 1 and a PTM transmission scheme 2.
[FIG. 7] FIG. 7 is a diagram for explaining the generation of a sequence regarding a GC-PDCCH.
[FIG. 8] FIG. 8 is a diagram for explaining the generation of a sequence regarding a GC-PDSCH.
[FIG. 9] FIG. 9 is a diagram for explaining the generation of a sequence regarding a DMRS for a GC-PDCCH.
[FIG. 10] FIG. 10 is a diagram for explaining the generation of a sequence regarding a DMRS for a GC-PDSCH.
[FIG. 11] FIG. 11 is a diagram illustrating a hardware configuration example of the gNB 100 and UE 200.
[FIG. 12] FIG. 12 is a diagram illustrating a configuration example of a vehicle 2001.

### Description of Embodiments

Embodiments will be described below with reference to the drawings. Note that the same or similar reference numerals have been attached to the same functions and configurations, and the description thereof is omitted as appropriate.

### [Embodiments]

### (1) Overall schematic configuration of the radio communication system

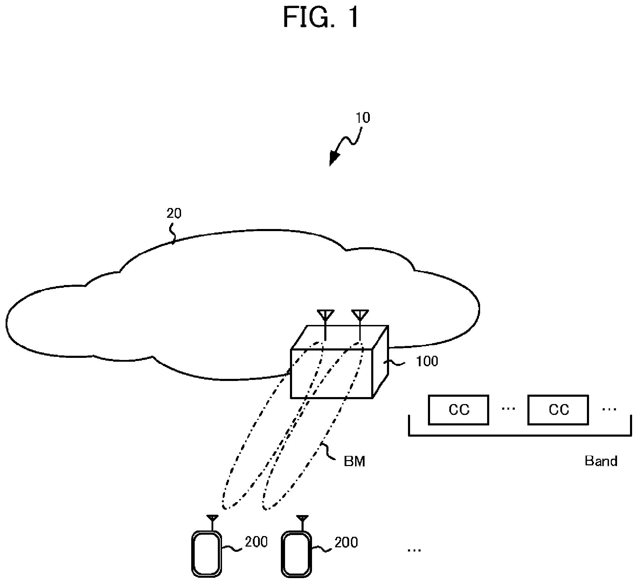

FIG. 1 is an overall schematic configuration diagram of a radio communication system 10 according to an embodiment. The radio communication system 10 is a 5G New Radio (NR) compliant radio communication system and includes a next generation-radio access network 20 (hereinafter, NG-RAN 20) and a terminal 200 (hereinafter, UE (user equipment) 200).

Note that the radio communication system 10 may be compliant with a radio communication system called Beyond 5G, 5G Evolution, or 6G.

The NG-RAN 20 includes a base station 100 (hereinafter, gNB 100). Note that the specific configuration of the radio communication system 10 including the number of the gNBs 100 and the UEs 200 is not limited to the example in FIG. 1.

The NG-RAN 20 actually includes multiple NG-RAN Nodes, specifically gNBs (or ng-eNBs), and is connected to a 5G-compliant core network (5GC, not illustrated). Note that the NG-RAN 20 and 5GC may be expressed simply as a "network".

The gNB 100 is a 5G-compliant radio base station and performs radio communication with the UE 200 according to 5G. The gNB 100 and the UE 200 can support Massive MIMO (multiple-input multiple-output) generating a beam BM with higher directivity by controlling radio signals transmitted from multiple antenna elements, a carrier aggregation (CA) bundling and using multiple component carriers (CCs), and dual connectivity (DC) performing simultaneous communication with two or more transport blocks between the UE and each of the two NG-RAN Nodes.

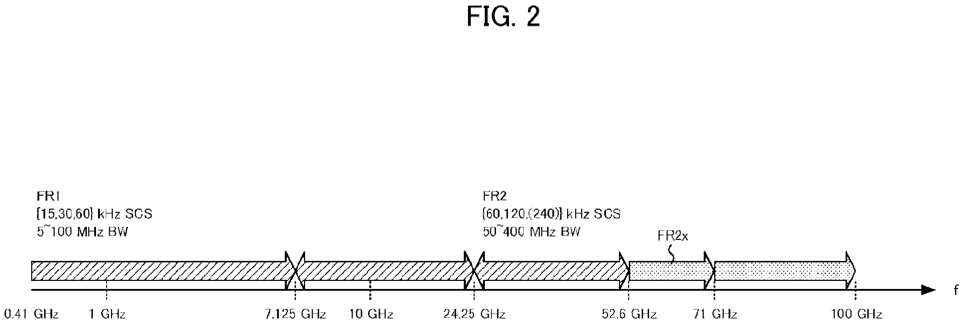

The radio communication system 10 also supports multiple frequency ranges (FRs). FIG. 2 illustrates frequency ranges used in the radio communication system 10.

As illustrated in FIG. 2, the radio communication system 10 supports FR1 and FR2. The frequency bands of the FRs are as follows.

- FR1: 410 MHz to 7.125 GHz
- FR2: 24.25 GHz to 52.6 GHz

FR1 may use a sub-carrier spacing (SCS) of 15, 30, or 60 kHz and a bandwidth (BW) of 5 to 100 MHz. FR2 has a higher frequency than FR1 and may use an SCS of 60 or 120 kHz (240 kHz may be included) and a bandwidth (BW) of 50 to 400 MHz.

Note that the SCS may be interpreted as numerology. Numerology is defined in 3GPP TS38.300 and corresponds to one sub-carrier spacing in a frequency domain.

In addition, the radio communication system 10 supports a frequency band higher than that of FR2. Specifically, the radio communication system 10 supports a frequency band above 52.6 GHz and up to 71 GHz or 114.25 GHz. Such a high frequency band may be called "FR2x" for convenience.

When a band above 52.6 GHz is used, cyclic prefix-orthogonal frequency division multiplexing (CP-OFDM) / discrete Fourier transform-spread (DFT-S-OFDM) having a larger sub-carrier spacing (SCS) may be applied in response to the issue in which the influence of phase noise increases in the high frequency band.

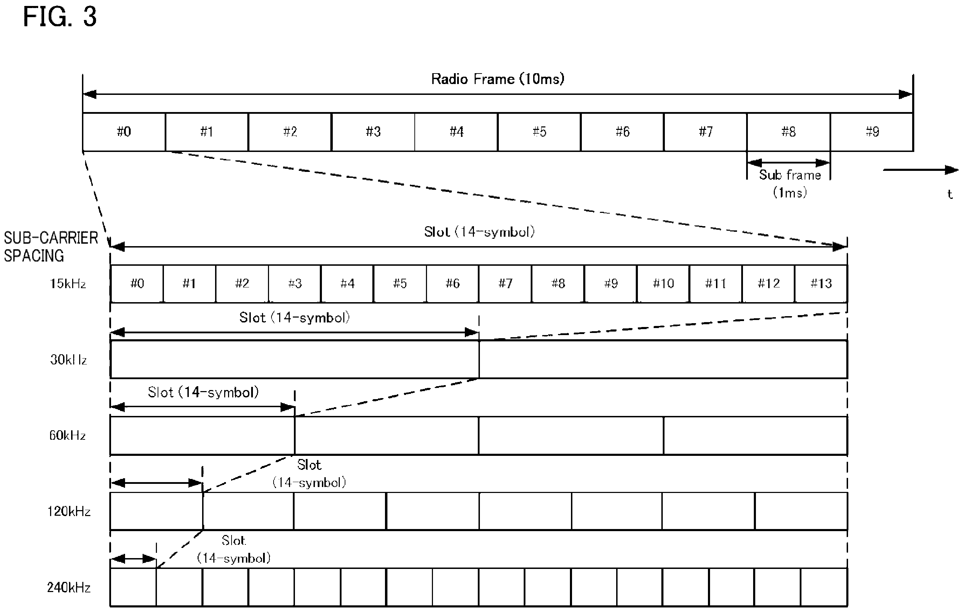

FIG. 3 illustrates a configuration example of a radio frame, subframes, and slots used in the radio communication system 10.

As illustrated in FIG. 3, a slot consists of 14 symbols, and the symbol length (and the slot length) gets shorter as the SCS gets larger (wider). The SCS is not limited to the spacing (frequencies) in FIG. 3. For example, 480 kHz, 960 kHz, and the like may be used.

The number of symbols constituting one slot does not necessarily have to be 14 (it may be 28 or 56 symbols). Further, the number of slots per subframe may differ depending on the SCS.

Note that a time direction (t) in FIG. 3 may be called a time domain, a symbol length, a symbol time, or the like. A frequency direction may be called a frequency domain, a resource block, a subcarrier, a bandwidth part (BWP), or the like.

A DMRS (demodulation reference signal) is a type of reference signal and is prepared for various channels. Here, unless otherwise noted, a DMRS for a downlink data channel, specifically for a PDSCH (physical downlink shared channel) and for a PDCCH (physical downlink control channel), may be included. However, a DMRS for an uplink data channel, specifically for a PUSCH (physical uplink shared channel), may be interpreted in the same manner as a DMRS for a PDSCH.

The DMRS can be used for channel estimation in the UE 200 as a device, for example, part of coherent demodulation. The DMRS may be present only in a resource block (RB) used for a PDSCH transmission.

The DMRS may have multiple mapping types. Specifically, the DMRS has mapping type A and mapping type B. In mapping type A, the first DMRS is arranged on the second or third symbol of a slot. In mapping type A, the DMRS may be mapped based on slot boundaries regardless of where in the slot the actual data transmission begins. The reason why the first DMRS is arranged on the second or third symbol of the slot may be interpreted as to arrange the first DMRS after control resource sets (CORESET).

In mapping type B, the first DMRS may be arranged on the first symbol in data allocation. That is, the position of the DMRS may be provided relatively to where data is arranged, not to slot boundaries.

The DMRS may have multiple types. Specifically, the DMRS may have Type 1 and Type 2. Type 1 and Type 2 differ in mapping in the frequency domain and the maximum number of orthogonal reference signals. Type 1 can output up to four orthogonal signals with a single-symbol DMRS, while Type 2 can output up to eight orthogonal signals with a double-symbol DMRS.

### (2) Function block configuration of the radio communication system

Next, a functional block configuration of the radio communication system 10 will be described.

First, a function block configuration of the UE 200 will be described.

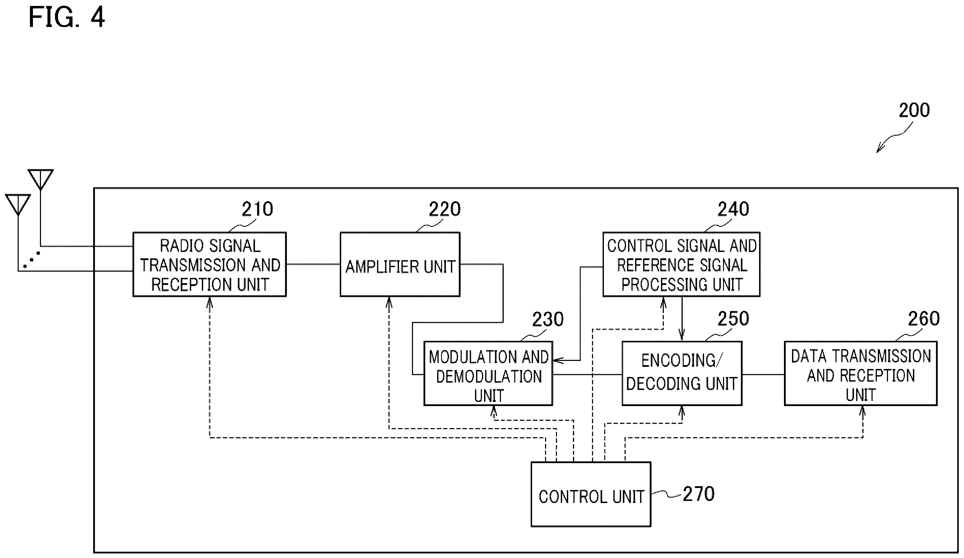

FIG. 4 is a functional block configuration diagram of the UE 200. As illustrated in FIG. 4, the UE 200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

The radio signal transmission and reception unit 210 transmits and receives radio signals in accordance with NR. The radio signal transmission and reception unit 210 supports Massive MIMO, CA bundling and using multiple CCs, and DC performing simultaneous communication between the UE and each of the two NG-RAN Nodes.

In the embodiment, the radio signal transmission and reception unit 210 may include a reception unit which receives a sequence regarding data delivery to multiple terminals (hereinafter, UEs 200). Data delivery to multiple UEs 200 may be referred to as MBS (multicast and broadcast services). The downlink channel may include a PDSCH (multicast) transmitted in multicast and may include a PDSCH (unicast) transmitted in unicast. In the following, a PDSCH (multicast) and a PDSCH (unicast) are collectively referred to as a PDSCH (multicast/unicast). The reception of a PDSCH (multicast/unicast) may be read as the reception of data via the PDSCH (multicast/unicast).

The sequence regarding MBS may include a sequence regarding control information (hereinafter, PDCCH) used in MBS, a sequence regarding data (hereinafter, PDSCH) delivered in MBS, a sequence regarding a reference signal used to demodulate PDCCH (PDCCH DMRS), and a sequence regarding a reference signal used to demodulate PDSCH (PDSCH DMRS).

The amplifier unit 220 includes a PA (power amplifier) / an LNA (low noise amplifier), or the like. The amplifier unit 220 amplifies the signal output from the modulation and demodulation unit 230 to a predetermined power level. The amplifier unit 220 also amplifies the RF signal output from the radio signal transmission and reception unit 210.

The modulation and demodulation unit 230 performs data modulation/demodulation, transmission power setting, resource block allocation, and the like for each predetermined communication destination (gNB 100 or another gNB). In the modulation and demodulation unit 230, cyclic prefix-orthogonal frequency division multiplexing (CP-OFDM) or discrete Fourier transform-spread (DFT-S-OFDM) may be applied. DFT-S-OFDM may also be used for a downlink (DL) as well as an uplink (UL).

The control signal and reference signal processing unit 240 performs processing regarding various control signals transmitted and received by the UE 200 and processing regarding various reference signals transmitted and received by the UE 200.

Specifically, the control signal and reference signal processing unit 240 receives various control signals transmitted from the gNB 100 via a predetermined control channel, for example, a control signal of a radio resource control (RRC) layer. The control signal and reference signal processing unit 240 also transmits various control signals to the gNB 100 through a predetermined control channel.

The control signal and reference signal processing unit 240 performs processing using a reference signal (RS) such as a demodulation reference signal (DMRS) and a phase tracking reference signal (PTRS).

A DMRS is a terminal-specific reference signal (pilot signal), known between a base station and a terminal for estimating a fading channel used for data demodulation. A PTRS is a terminal-specific reference signal for the purpose of estimating phase noise, which becomes an issue in a high frequency band.

Note that the reference signal includes a channel state information-reference signal (CSI-RS), a sounding reference signal (SRS), and a positioning reference signal (PRS) for location information, in addition to the DMRS and PTRS.

The channel includes a control channel and a data channel. The control channel includes a PDCCH (physical downlink control channel), a PUCCH (physical uplink control channel), an RACH (random access channel), downlink control information (DCI) including a random access radio network temporary identifier (RA-RNTI), a physical broadcast channel (PBCH), and the like.

The data channel includes a PDSCH (physical downlink shared channel), a PUSCH (physical uplink shared channel), and the like. Data here means data that is transmitted via a data channel. The data channel may be substituted with a shared channel.

Here, the control signal and reference signal processing unit 240 may receive downlink control information (DCI). The DCI includes existing fields to store DCI formats, a carrier indicator (CI), a BWP indicator, an FDRA (frequency domain resource allocation), a TDRA (time domain resource allocation), an MCS (modulation and coding scheme), an HPN (HARQ process number), an NDI (new data indicator), an RV (redundancy version), and the like.

A value stored in a DCI format field is an information element to specify a format of the DCI. A value stored in a CI field is an information element to specify a CC to which the DCI is applied. A value stored in a BWP indicator field is an information element to specify a BWP to which the DCI is applied. The BWP that can be specified by the BWP indicator is configured by an information element (BandwidtPart-Config) included in an RRC message. A value stored in an FDRA field is an information element to specify a frequency domain resource to which the DCI is applied. The frequency domain resource is identified by a value stored in the FDRA field and an information element (RA Type) included in the RRC message. A value stored in a TDRA field is an information element to specify a time domain resource to which the DCI is applied. The time domain resource is identified by a value stored in the TDRA field and an information element (pdsch-TimeDomainAllocationList, pusch-TimeDomainAllocationList) included in the RRC message. The time domain resource may be identified by a value stored in the TDRA field and a default table. A value stored in an MCS field is an information element to specify an MCS to which the DCI is applied. The MCS is identified by a value stored in the MCS and an MCS table. The MCS table may be specified by the RRC message, or identified by RNTI scrambling. A value stored in an HPN field is an information element to specify an HARQ process to which the DCI is applied. A value stored in the NDI is an information element to identify whether data to which the DCI is applied is the first transmission data. A value stored in an RV field is an information element to specify the redundancy of data to which the DCI is applied.

The encoding/decoding unit 250 performs data division/connection, channel coding/decoding, and the like for each predetermined communication destination (gNB 100 or another gNB).

Specifically, the encoding/decoding unit 250 divides the data output from the data transmission and reception unit 260 into predetermined sizes and performs channel coding on the divided data. The encoding/decoding unit 250 also decodes the data output from the modulation and demodulation unit 230 and connects the decoded data.

The data transmission and reception unit 260 performs transmission and reception of protocol data units (PDU) and service data units (SDU). Specifically, the data transmission and reception unit 260 performs assembly, disassembly, and the like of PDUs/SDUs in multiple layers (medium access control (MAC) layer, radio link control (RLC) layer, packet data convergence protocol (PDCP) layer, and the like). The data transmission and reception unit 260 also performs error correction and retransmission control of data on the basis of an HARQ (hybrid automatic repeat request).

The control unit 270 controls each of the functional blocks configuring the UE 200. In the embodiment, the control unit 270 includes a control unit that generates, when a specific condition is satisfied, on the basis of a specific parameter included in broadcast information, a specific sequence to be applied to a sequence regarding MBS. The broadcast information may be an SIB (system information block). The broadcast information may be considered to be information which can be received by the UE 200 in an RRC idle or RRC inactive state. The broadcast information may be considered to be information which is broadcast from an NW (cell).

The specific condition may include a condition for receiving a sequence regarding MBS in an idle (RRC idle) or inactive (RRC inactive) state. The specific condition may include a condition where a sequence regarding MBS is related to a specific channel regarding MBS. The specific channel may include an MCCH (multicast control channel) and may include an MTCH (multicast traffic channel).

Second, a functional block configuration of the gNB 100 will be described.

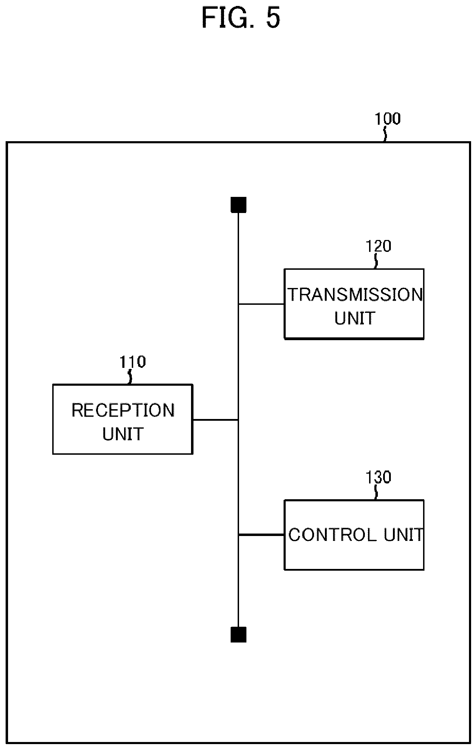

FIG. 5 is a functional block configuration diagram of the gNB 100. As illustrated in FIG. 5, the gNB 100 includes a reception unit 110, a transmission unit 120, and a control unit 130.

The reception unit 110 receives various signals from UEs 200. The reception unit 110 may receive UL signals via a PUCCH or PUSCH.

The transmission unit 120 transmits various signals to UEs 200. The transmission unit 120 may transmit DL signals via a PDCCH or PDSCH. In the embodiment, the transmission unit 120 may include a transmission unit which transmits a sequence regarding data delivery (MBS) to multiple UEs 200.

The control unit 130 controls the gNB 100. In the embodiment, the control unit 130 may include a control unit which assumes that a specific sequence to be applied to a sequence regarding MBS is generated by multiple UEs 200 on the basis of a specific parameter included in broadcast information when a specific condition is satisfied. That is, the control unit 130 may control the transmission of a sequence regarding MBS (for example, a GC-PDCCH, a GC-PDSCH, a DMRS for a GC-PDCCH, a DMRS for a GC-PDSCH) under such an assumption.

### (3) Provision of MBS

Multicast and broadcast services (MBS) may be provided in the radio communication system 10.

For example, in a stadium or hall, a large number of UEs 200 are positioned in a certain geographical area, and a case is assumed in which the large number of UEs 200 simultaneously receive the same data. In such a case, it is effective to use MBS instead of unicast.

Note that unicast may be interpreted as one-to-one communication with a network by specifying a specific UE 200 (UE 200 specific identification information may be specified).

Multicast may be interpreted as one-to-many (specific many) communication with a network by specifying specific multiple UEs 200 (multicast identification information may be specified). Note that the number of UEs 200 which receive the received multicast data may ultimately be one.

Broadcast may be interpreted as one-to-unspecified many communication with a network for all UEs 200. The data to be multicast/broadcast may have the same copied contents, but some contents, such as headers, may be different. The data to be multicast/broadcast may also be transmitted (delivered) simultaneously, but strict concurrency is not necessarily required, and propagation delays and/or processing delays within a RAN node may be included.

Note that the target UEs 200 may be in any of the following states of the wireless resource control layer (RRC): idle (RRC idle), connected (RRC connected), or other states (for example, inactive). The inactive state may be interpreted as a state where part of the RRC configuration is maintained.

MBS assumes the following three methods for scheduling a multicast/broadcast PDSCH, specifically for scheduling MBS packets (which may be read as data). Note that an RRC connected UE may be read as an RRC idle UE or RRC inactive UE.

· PTM transmission scheme 1 (PTM-1):
   · A group-common PDSCH is scheduled for an MBS group of RRC connected UEs using a group-common PDCCH (physical downlink control channel).
   · CRC of a PDCCH and a PDSCH are scrambled by a group-common RNTI (radio network temporary identifier, which may be called a G-RNTI).
· PTM Transmission scheme 2 (PTM-2):
   · A group-common PDSCH is scheduled for an MBS group of RRC connected UEs using a UE-specific PDCCH.
   · CRC of a PDCCH is scrambled by a UE-specific RNTI
   · PDSCH is scrambled by a group-common RNTI
· PTP transmission scheme:
   · A UE-specific PDSCH is scheduled for an RRC connected UE using a UE-specific PDCCH.
   · CRC of a PDCCH and a PDSCH are scrambled by a UE-specific RNTI. That is, this may mean that MBS packets are transmitted in unicast.

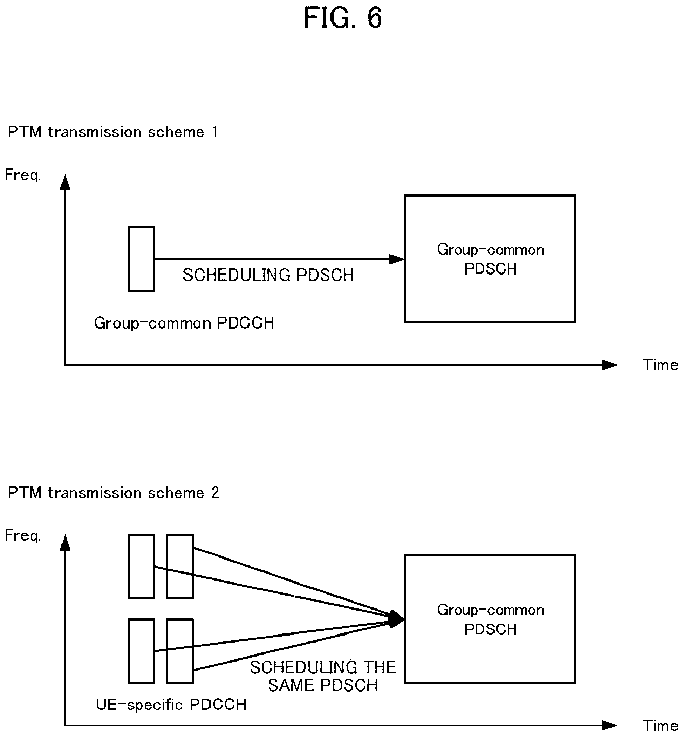

FIG. 6 illustrates configuration examples of PTM transmission scheme 1 and PTM transmission scheme 2. Note that the UE-specific PDCCH/PDSCH can be identified by a target UE, but does not need to be identified by other UEs in the same MBS group. The group-common PDCCH/PDSCH is transmitted in the same time/frequency resource and can be identified by all UEs in the same MBS group. The name of PTM transmission schemes 1 and 2 are tentative and may be called by another name as long as the operations described above are performed.

Note that in point-to-point (PTP) delivery, a RAN node may deliver separate copies of MBS data packets to individual UEs by radio. In point-to-multipoint (PTM) delivery, a RAN node may deliver a single copy of MBS data packets to a set of UEs by radio.

To improve MBS reliability, the following two feedback methods are assumed for an HARQ (hybrid automatic repeat request) feedback, specifically for an HARQ feedback for a multicast/broadcast PDSCH.

· Option 1: Feedback of both ACK/NACK is provided (ACK/NACK feedback).
   · A UE which has succeeded in receiving and decoding a PDSCH transmits an ACK.
   · A UE which has failed in receiving or decoding a PDSCH transmits a NACK.
· PUCCH (physical uplink control channel) resource configuration: PUCCH-Config can be configured for multicast
   - PUCCH resource: A shared/orthogonal configuration between UEs depends on the network configuration
   - HARQ-ACK CB (codebook): Type-1 and type-2 (CB decision algorithm (specified in 3GPP TS38.213)) are supported.
   - Multiplexing: Unicast or multicast can be applied.
· Option 2: Feedback of only NACK is provided (NACK-only feedback).
   - A UE which has succeeded in receiving and decoding a PDSCH does not transmit an ACK (does not transmit a response).
   - A UE which has failed in receiving or decoding a PDSCH transmits a NACK.
   - In a predetermined UE, a PUCCH resource configuration can be configured separately in unicast or group cast (multicast).

Note that the ACK may be called a positive acknowledgement (positive response) and the NACK may be called a negative acknowledgement (negative response). The HARQ may be called an automatic retransmission request.

Any of the following may be applied to enable and disable Option 1 or Option 2.

· RRC and downlink control information (DCI)
· RRC only

The following is assumed for SPS (semi-persistent scheduling) of a multicast/broadcast PDSCH.

· An SPS group-common PDSCH is adopted.
· Multiple SPS group-common PDSCHs can be configured as UE capability.
· HARQ feedback for an SPS group-common PDSCH is possible.
· At least activation/deactivation via a group-common PDCCH (downlink control channel) is possible.

Note that deactivation may be substituted with other synonymous terms, such as release. For example, activation may be substituted with booting, starting, triggering, or the like, and deactivation may be further substituted with terminating, stopping, or the like.

SPS is scheduling used as a contrast to dynamic scheduling, and may be called a semi-fixed scheduling, semi-persistent scheduling, semi-permanent scheduling, or the like and may be interpreted as configured scheduling (CS).

Scheduling may be interpreted as a process of allocating resources for transmitting data. Dynamic scheduling may be interpreted as a mechanism in which all PDSCHs are scheduled using DCI (for example, DCI 1_0, DCI 1_1, or DCI 1_2). SPS may be interpreted as a mechanism in which a PDSCH transmission is scheduled by higher-layer signaling, such as an RRC message.

For the physical layer, there may be scheduling categories of time-domain scheduling and frequency-domain scheduling.

Multicast, group cast, broadcast, and MBS may be read interchangeably. A multicast PDSCH and a PDSCH scrambled by a group common RNTI may be read interchangeably.

Further, terms of data and packet may be read interchangeably and may be interpreted as synonymous with terms of signal, data unit, and the like. Transmission, reception, transmission, and delivery may be read interchangeably.

### (4) Issues

In the embodiment, attention is paid to MBS for multiple UEs 200 in an RRC idle or RRC inactive state. In such a case, it is assumed that multiple UEs 200 in an RRC idle or RRC inactive state receive a GC (group common)-PDCCH and a GC-PDSCH. The GC-PDCCH may be referred to as a GC-PDCCH for MCCH/MTCH, and the GC-PDSCH may be referred to as a GC-PDSCH for MCCH/MTCH.

In such a case, the multiple UEs 200 need to use a common sequence as a specific sequence to be applied to a sequence regarding a GC-PDCCH. Similarly, the multiple UEs 200 need to use a common sequence as a specific sequence to be applied to a sequence regarding a GC-PDSCH. The specific sequence may be referred to as a scrambling sequence.

Further, the multiple UEs 200 need to use a common sequence as a specific sequence to be applied to a sequence regarding a DMRS for demodulation of a GC-PDCCH. Similarly, the multiple UEs 200 need to use a common sequence as a specific sequence to be applied to a sequence regarding a DMRS for demodulation of a GC-PDSCH. The specific sequence may be referred to as a pseudo-random sequence.

The initial value (cᵢₙᵢₜ) of the specific sequence is generated using a specific parameter (n_{ID} or N_{ID}). Thus, a specific parameter (n_{ID} or N_{ID}) common to multiple UEs 200 needs to be used.

Against this background, the inventors found it necessary to clarify how multiple UEs 200 in an RRC idle or RRC inactive state acquire a specific parameter.

### (5) Operation examples

In the embodiment, the following solution method is adopted for the above-mentioned issues. Specifically, when a specific condition is satisfied, a UE 200 generates, on the basis of a specific parameter (n_{ID} or N_{ID}) included in broadcast information (for example, SIB), a specific sequence (cᵢ) to be applied to a sequence regarding MBS. Specifically, the UE 200 generates an initial value (cᵢₙₜ) of the specific sequence on the basis of the specific parameter (n_{ID} or N_{ID}). Hereinafter, each sequence regarding MBS will be described separately.

### (5.1) GC-PDCCH

When a specific condition is satisfied, a UE 200 generates, on the basis of a specific parameter (n_{ID}) included in broadcast information (for example, SIB), an initial value (cᵢₙₜ) of a specific sequence to be applied to a GC-PDCCH. The specific parameter (n_{ID}) may have the same value as the higher layer parameter (for example, pdcch-DMRS-ScramblingID). The higher layer parameter may be included in the SIB. The name of the higher layer parameter included in the SIB may be the same as the name of the higher layer parameter included in an RRC message or CORESET, or may be different from the name of the higher layer parameter included in the RRC message or CORESET. Note that even when the name of the higher layer parameter included in the SIB is the same as the name of the higher layer parameter included in the RRC message or CORSET, each of the parameters may be used to configure/notify a different value/content.

The specific condition may include a condition to be used in an RRC idle or RRC inactive state. The specific condition may include a condition to be used in a GC-PDCCH of a MCCH or MTCH. The specific condition may include a condition to be used in a UE-common search space for a GC-PDCCH. The specific condition may be defined by a combination of these conditions.

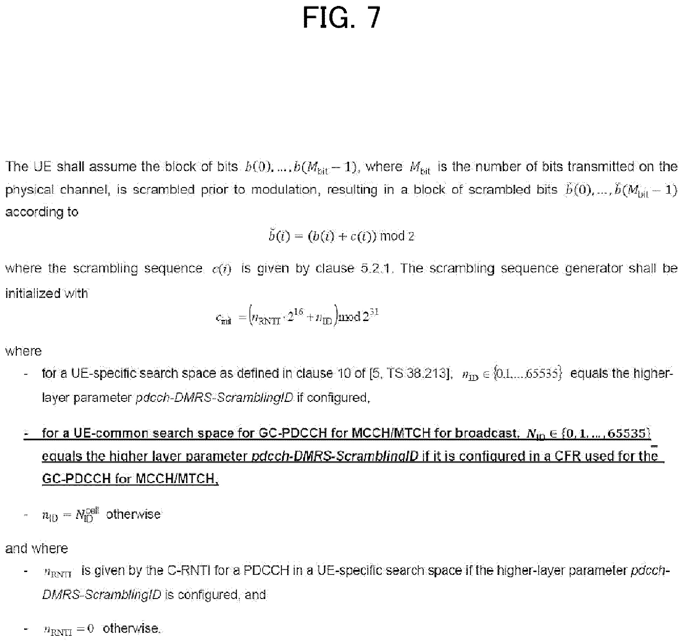

In such a case, for the operation of the UE 200 described in §7.3.2.3 "Scrambling" of 3GPP TS38.211, an underlined part may be added as illustrated in FIG. 7.

As illustrated in FIG. 7, when a higher layer parameter (pdcch-DMRS-ScramblingID) is configured for a "CFR (common frequency resource) used for the GC-PDCCH for MCCH/MTCH" in a "UE-common search space for GC-PDCCH for MCCH/MTCH for broadcast", the UE 200 may use a higher layer parameter (pdcch-DMRS-ScramblingID) included in the SIB as a specific parameter (n_{ID}).

Here, n_{RNTI} used for the initial value of an initial value (cᵢₙₜ) of a specific sequence is determined by the C-RNTI for a "PDCCH in a UE-specific search space" when the higher layer parameter (pdcch-DMRS-ScramblingID) is configured. However, in the embodiment, the statement may be excluded that the n_{RNTI} is determined by the C-RNTI for a "PDCCH in a UE-specific search space" when the higher layer parameter (pdcch-DMRS-ScramblingID) is configured for a "CFR used for the GC-PDCCH for MCCH/MTCH".

Further, for a "UE-common search space" other than a "UE-common search space for GC-PDCCH for MCCH/MTCH for broadcast", a specific parameter included in the SIB may be used, or a specific parameter defined by "otherwise" in FIG. 7 may be used.

### (5.2) GC-PDSCH

When a specific condition is satisfied, a UE 200 generates, on the basis of a specific parameter (n_{ID}) included in broadcast information (for example, SIB), an initial value (cᵢₙₜ) of a specific sequence to be applied to a GC-PDSCH. The specific parameter (n_{ID}) may have the same value as a higher layer parameter (for example, dataScramblingIdentityPDSCH). The higher layer parameter may be included in the SIB. The name of the higher layer parameter included in the SIB may be the same as the name of the higher layer parameter included in an RRC message or CORSET, or may be different from the name of the higher layer parameter included in the RRC message or CORSET. Note that even when the name of the higher layer parameter included in the SIB is the same as the name of the higher layer parameter included in the RRC message or CORSET, each of the parameters may be used to configure/notify a different value/content.

The specific condition may include a condition to be used in an RRC idle or RRC inactive state. The specific condition may include a condition to be used in a GC-PDSCH of a MCCH or MTCH. The specific condition may be defined by a combination of these conditions.

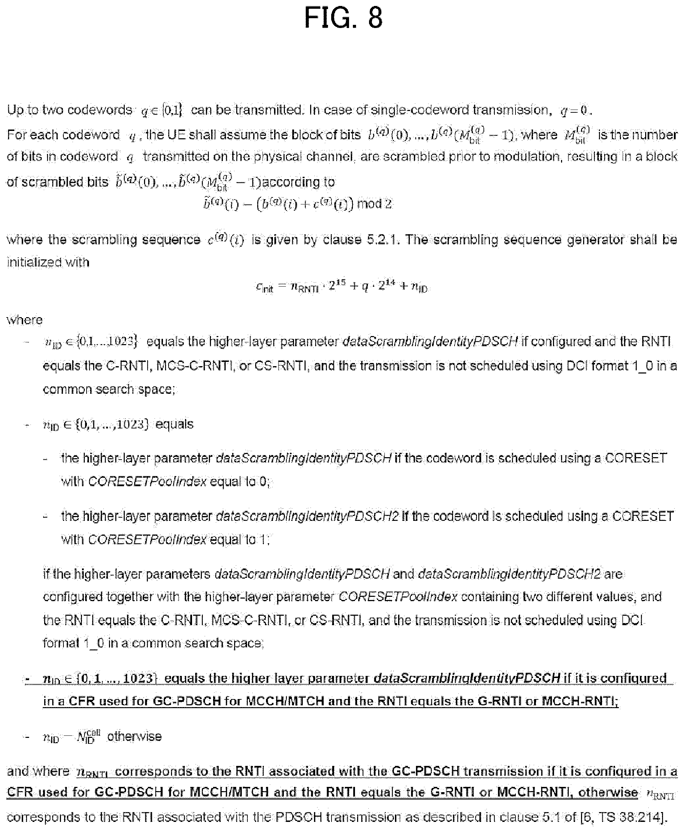

In such a case, for the operation of the UE 200 described in §7.3.1.1 "Scrambling" of 3GPP TS38.211, an underlined part may be added as illustrated in FIG. 8.

As illustrated in FIG. 8, when a higher layer parameter (dataScramblingIdentityPDSCH) is configured for a "CFR used for the GC-PDSCH for MCCH/MTCH", the UE 200 may use a higher layer parameter (pdsch-DMRS-ScramblingID) included in the SIB as a specific parameter (n_{ID}) .

Here, n_{RNTI} used for the initial value of an initial value (cᵢₙₜ) of a specific sequence may be RNTI associated with GC-PDSCH transmission when the RNTI associated with the GC-PDSCH transmission is configured for a "CFR used for the GC-PDSCH for MCCH/MTCH". The n_{RNTI} may be a G-RNTI or MCCH-RNTI.

### (5.3) DMRS for GC-PDCCH

When a specific condition is satisfied, a UE 200 generates, on the basis of a specific parameter (N_{ID}) included in broadcast information (for example, SIB), an initial value (cᵢₙₜ) of a specific sequence to be applied to a DMRS for a GC-PDCCH. The specific parameter (N_{ID}) may be determined by a higher layer parameter (for example, pdcch-DMRS-ScramblingID). The higher layer parameter may be included in the SIB. The name of the higher layer parameter included in the SIB may be the same as the name of the higher layer parameter included in an RRC message or CORESET, or may be different from the name of the higher layer parameter included in the RRC message or CORESET. Note that even when the name of the higher layer parameter included in the SIB is the same as the name of the higher layer parameter included in the RRC message or CORESET, each of the parameters may be used to configure/notify a different value/content.

The specific condition may include a condition to be used in an RRC idle or RRC inactive state. The specific condition may include a condition to be used in a GC-PDCCH of a MCCH or MTCH. The specific condition may include a condition to be used in a UE-common search space for a GC-PDCCH. The specific condition may be defined by a combination of these conditions.

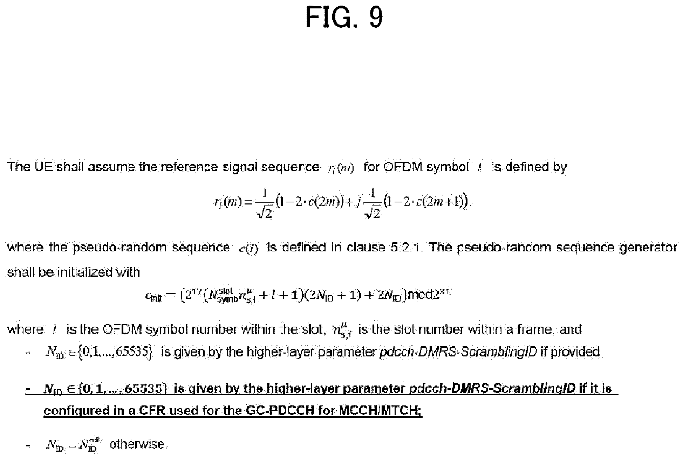

In such a case, for the operation of the UE 200 described in §7.4.1.3.1 "Sequence generation" of 3GPP TS38.211, an underlined part may be added as illustrated in FIG. 9.

As illustrated in FIG. 9, when a higher layer parameter (pdcch-DMRS-ScramblingID) is configured for a "CFR (common frequency resource) used for the GC-PDCCH for MCCH/MTCH", the UE 200 may use the higher layer parameter (pdcch-DMRS-ScramblingID) included in the SIB as a specific parameter (N_{ID}).

Here, a case is considered where both pdcch-DMRS-ScramblingID (hereinafter, existing pdcch-DMRS-ScramblingID) defined in the existing specification (for example, Release15/16) and pdcch-DMRS-ScramblingID (hereinafter, new pdcch-DMRS-ScramblingID) included in SIB are defined.

In such a case, the new pdcch-DMRS-ScramblingID may be used without distinguishing between "a UE-common search space" and "a UE-specific search space" (Option 1). Alternatively, the new pdcch-DMRS-ScramblingID may be used for a DMRS for a GC-PDCCH regarding "a UE-common search space", and the existing pdcch-DMRS-ScramblingID may be used for a DMRS for a GC-PDCCH regarding "a UE-specific search space" (Option 2).

Note that in Option 2, the same specific parameter as for a GC-PDCCH is used for a DMRS for a GC-PDCCH, and thus the operation of Option 2 may be considered desirable.

### (5.4) DMRS for GC-PDSCH

When a specific condition is satisfied, a UE 200 generates, on the basis of a specific parameter (N_{ID}) included in broadcast information (for example, SIB), an initial value (cᵢₙₜ) of a specific sequence to be applied to a DMRS for a GC-PDSCH. The specific parameter (N_{ID}) may be determined by a higher layer parameter (for example, scramblingID0). The higher layer parameter may be included in the SIB. The name of the higher layer parameter included in the SIB may be the same as the name of the higher layer parameter included in an RRC message or CORESET, or may be different from the name of the higher layer parameter included in the RRC message or CORESET. Note that even when the name of the higher layer parameter included in the SIB is the same as the name of the higher layer parameter included in the RRC message or CORESET, each of the parameters may be used to configure/notify a different value/content.

The specific condition may include a condition to be used in an RRC idle or RRC inactive state. The specific condition may include a condition to be used in a GC-PDSCH of a MCCH or MTCH. The specific condition may include a condition in which a PDSCH is scheduled by a PDCCH which includes DCI format 1_0 with CRC scrambled by a G-RNTI or MCCH-RNTI. The specific condition may be defined by a combination of these conditions.

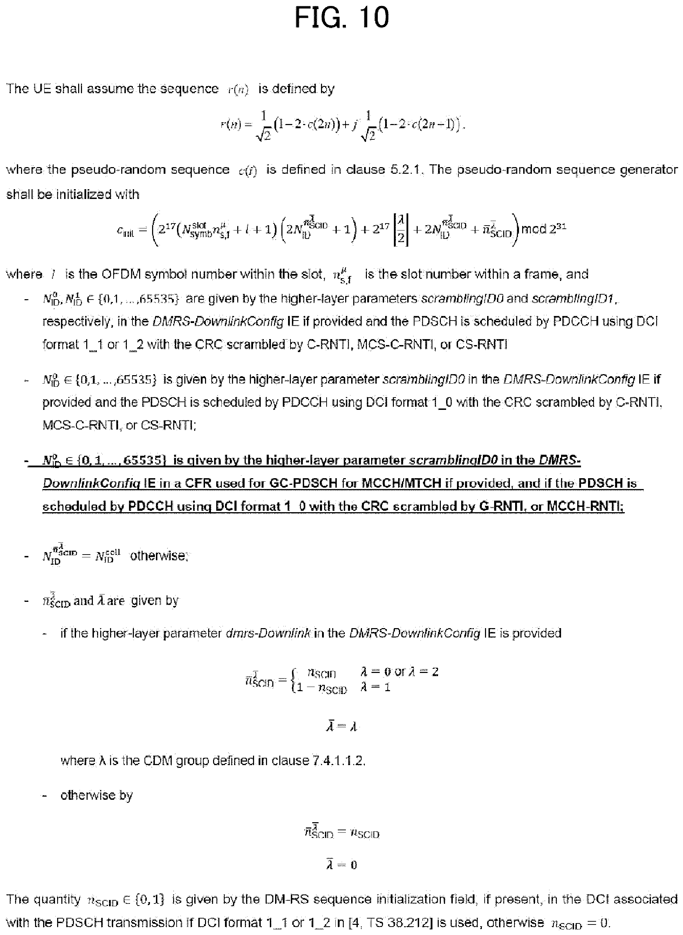

In such a case, for the operation of the UE 200 described in §7.4.1.1.1 "Sequence generation" of 3GPP TS38.211, an underlined part may be added as illustrated in FIG. 10.

As illustrated in FIG. 10, when a higher layer parameter (scramblingIDO) is configured for a "CFR (common frequency resource) used for the GC-PDSCH for MCCH/MTCH", the UE 200 may use the higher layer parameter (scramblingIDO) as a specific parameter (N_{ID}). Further, when the condition "the PDSCH is scheduled by PDCCH using DCI format 1_0 with the CRC scrambled by G-RNTI, or MCCH-RNTI" is satisfied, the higher layer parameter (scramblingIDO) included in the SIB may be used as a specific parameter (N_{ID}). The higher layer parameter (scramblingIDO) may be included in DMRS-DownlinkConfig.

### (6) Action and effect

In the embodiment, when a specific condition is satisfied, a UE 200 generates, on the basis of a specific parameter included in broadcast information (for example, SIB), a specific sequence (cᵢ) to be applied to a sequence (for example, a GC-PDCCH, GC-PDSCH, DMRS for GC-PDCCH, and DMRS for GC-PDSCH) regarding MBS, specifically, an initial value (cᵢₙₜ) of the specific sequence. Such a configuration clarifies a method for obtaining, by a UE 200 in an RRC idle or RRC inactive state, a specific parameter to generate a specific sequence (for example, a scrambling sequences or pseudo-random sequences). Thus, the UE 200 in an RRC idle or RRC inactive state can appropriately identify various sequences regarding MBS.

### (7) Other embodiments

Although the contents of the present invention have been described in accordance with the embodiment, the present invention is not limited to these descriptions, and it is obvious to those skilled in the art that various modifications and improvements thereof are possible.

In the above description, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

In addition, terms such as specific, dedicated, UE-specific, and UE-dedicated may be read interchangeably. Similarly, terms such as common, shared, group-common, UE-common, and UE-shared may be read interchangeably.

The block diagram (FIGs. 4 and 5) used in the description of the above-described embodiment shows blocks in units of functions. Those functional blocks (components) can be realized by a desired combination of at least one of hardware and software. A realization method for each functional block is not particularly limited. That is, each functional block may be realized by using one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that makes a transmitting function work is called a transmitting unit or a transmitter. For any of the above, as described above, the realization method is not particularly limited.

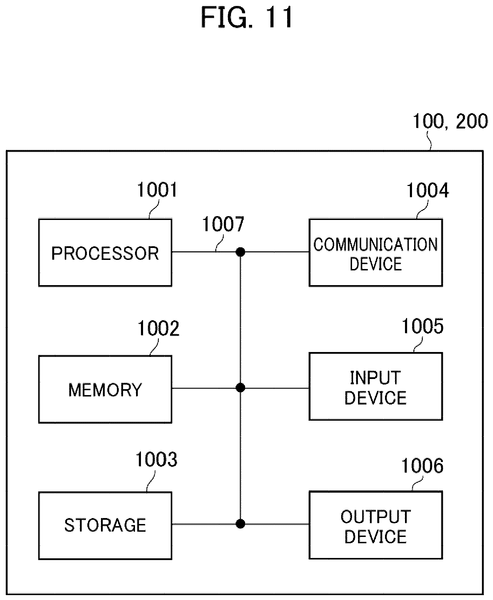

Further, the above-described gNB 100 and UE 200 (the device) may function as a computer that performs processing of a radio communication method of the present disclosure. FIG. 11 is a diagram showing an example of a hardware configuration of the device. As shown in FIG. 11, the device may be configured as a computer device including a processor 1001, a memory 1002, a storage 1003, a communication device 1004, an input device 1005, an output device 1006, a bus 1007, and the like.

Furthermore, in the following description, the term "device" can be substituted with circuit, device, unit, or the like. The hardware configuration of the device may include one or more devices shown in the figure or may not include some of the devices.

Each of the functional blocks of the device (see FIG. 4) is implemented by means of any of hardware elements of the computer device or a combination of the hardware elements.

In addition, each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 operates, for example, an operating system to control the entire computer. The processor 1001 may be configured with a Central Processing Unit (CPU) including interfaces with peripheral devices, control devices, arithmetic devices, registers, and the like.

Moreover, the processor 1001 reads a program (program code), a software module, data, and the like from at least one of the storage 1003 and the communication device 1004 into the memory 1002, and executes various processes according to these. As the program, a program causing the computer to execute at least part of the operation described in the above embodiment is used. Alternatively, various processes described above can be executed by one processor 1001 or can be executed simultaneously or sequentially by two or more processors 1001. The processor 1001 can be implemented by using one or more chips. Alternatively, the program may be transmitted from a network via a telecommunication line.

The memory 1002 is a computer readable recording medium and may be configured, for example, with at least one of a Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), and the like. The memory 1002 may store therein programs (program codes), software modules, and the like that can execute the method according to one embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 can be referred to as an auxiliary storage device. The recording medium can be, for example, a database including at least one of the memory 1002 and the storage 1003, a server, or other appropriate medium.

The communication device 1004 is hardware (transmission/reception device) capable of performing communication between computers via at least one of a wired network and a wireless network. The communication device 1004 is also referred to as, for example, a network device, a network controller, a network card, a communication module, and the like.

The communication device 1004 may include a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may have an integrated configuration (for example, a touch screen).

Also, the respective devices such as the processor 1001 and the memory 1002 are connected to each other with the bus 1007 for communicating information. The bus 1007 may be constituted by a single bus or may be constituted by different buses for each device-to-device.

Further, the device may be configured to include hardware such as a microprocessor, a Digital Signal Processor (DSP), an Application Specific Integrated Circuit (ASIC), a Programmable Logic Device (PLD), and a Field Programmable Gate Array (FPGA). Some or all of these functional blocks may be realized by means of this hardware. For example, the processor 1001 may be implemented by using at least one of the above-described items of hardware.

Further, notification of information is not limited to that in the aspect/embodiment described in the present disclosure, and may be performed by using other methods. For example, notification of information may be performed by physical layer signaling (for example, Downlink Control Information (DCI), Uplink Control Information (UCI)), higher layer signaling (for example, RRC signaling, Medium Access Control (MAC) signaling), broadcast information (Master Information Block (MIB), System Information Block (SIB)), other signals, or a combination thereof. The RRC signaling may also be referred to as an RRC message, for example, or may be an RRC Connection Setup message, an RRC Connection Reconfiguration message, or the like.

Each aspect/embodiment described in the present disclosure can be applied to at least one of Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and a next-generation system that is expanded based on these. Further, a plurality of systems may be combined (for example, a combination of at least one of LTE and LTE-A with 5G) and applied.

The order of the processing procedures, sequences, flowcharts, and the like of each aspect/embodiment described in the present disclosure may be exchanged as long as there is no contradiction. For example, the methods described in the present disclosure present the elements of the various steps by using an exemplary order and are not limited to the presented specific order.

The specific operation that is performed by a base station in the present disclosure may be performed by its upper node in some cases. In a network constituted by one or more network nodes having a base station, it is obvious that the various operations performed for communication with the terminal may be performed by at least one of the base station and other network nodes other than the base station (for example, an MME, an S-GW, and the like may be considered, but there is not limited thereto). In the above, an example in which there is one network node other than the base station is explained; however, a combination of a plurality of other network nodes (for example, an MME and an S-GW) may be used.

Information and signals (information and the like) can be output from a higher layer (or lower layer) to a lower layer (or higher layer). These may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by using a value (0 or 1) represented by one bit, by truth-value (Boolean: true or false), or by comparison of numerical values (for example, comparison with a predetermined value).

Each of the aspects/embodiment described in the present disclosure may be used separately or in combination, or may be switched in accordance with the execution. In addition, notification of predetermined information (for example, notification of "is X") is not limited to being performed explicitly, and it may be performed implicitly (for example, without notifying the predetermined information).

Regardless of being referred to as software, firmware, middleware, microcode, hardware description language, or some other name, software should be interpreted broadly to mean instructions, an instruction set, code, a code segment, program code, a program, a subprogram, a software module, an application, a software application, a software package, a routine, a subroutine, an object, an executable file, an execution thread, a procedure, a function, and the like.

Further, software, instruction, information, and the like may be transmitted and received via a transmission medium. For example, when software is transmitted from a website, a server, or another remote source by using at least one of a wired technology (a coaxial cable, an optical fiber cable, a twisted pair cable, a Digital Subscriber Line (DSL), or the like) and a wireless technology (infrared light, microwave, or the like), then at least one of these wired and wireless technologies is included within the definition of the transmission medium.

Information, signals, or the like described in the present invention may be represented by using any of a variety of different technologies. For example, data, an instruction, a command, information, a signal, a bit, a symbol, a chip, or the like that may be mentioned throughout the above description may be represented by a voltage, a current, an electromagnetic wave, a magnetic field or magnetic particles, an optical field or photons, or a desired combination thereof.

It should be noted that the terms described in the present disclosure and terms necessary for understanding the present disclosure may be replaced with terms having the same or similar meanings. For example, at least one of a channel and a symbol may be a signal (signaling). A signal may also be a message. Further, a Component Carrier (CC) may be referred to as a carrier frequency, a cell, a frequency carrier, or the like.

The terms "system" and "network" used in the present disclosure can be used interchangeably.

Furthermore, information, parameters, and the like described in the present disclosure can be represented by an absolute value, can be represented by a relative value from a predetermined value, or can be represented by corresponding other information. For example, a radio resource can be indicated using an index.

Names used for the above parameters are not restrictive names in any respect. In addition, formulas and the like using these parameters may be different from those explicitly disclosed in the present disclosure. Since the various channels (for example, a PUCCH, a PDCCH, or the like) and information elements can be identified by any suitable names, the various names allocated to these various channels and information elements shall not be restricted in any way.

In the present disclosure, the terms such as "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. A base station may also be referred to with a term such as a macro cell, a small cell, a femtocell, or a pico cell.

A base station can accommodate one or more (for example, three) cells (also referred to as sectors). In a configuration in which a base station accommodates a plurality of cells, the entire coverage area of the base station can be divided into a plurality of smaller areas. In each of the smaller areas, a communication service can be provided by a base station subsystem (for example, a small base station for indoor use (remote radio head: RRH)).

The term "cell" or "sector" refers to a part or all of the coverage area of at least one of a base station and a base station subsystem that performs a communication service in this coverage.

In the present disclosure, the terms such as "mobile station (Mobile Station: MS)", "user terminal", "user equipment (User Equipment: UE)", and "terminal" can be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms by those skilled in the art.

At least one of a base station and a mobile station may be called a transmitting device, a receiving device, a communication device, or the like. Note that at least one of a base station and a mobile station may be a device mounted on a moving body, a moving body itself, or the like. The moving body may be a vehicle (for example, a car, an airplane, or the like), an unmanned moving body

(a drone, a self-driving car, or the like), or a robot (manned type or unmanned type). At least one of a base station and a mobile station also includes a device that does not necessarily move during the communication operation. For example, at least one of a base station and a mobile station may be an Internet of Things (IoT) device such as a sensor.

Also, a base station in the present disclosure may be substituted with a mobile station (user terminal, hereinafter the same). For example, each aspect/embodiment of the present disclosure may be applied to a configuration in which communication between a base station and a mobile station is replaced with communication between a plurality of mobile stations (for example, this may be called Device-to-Device (D2D), Vehicle-to-Everything (V2X), or the like). In this case, the mobile station may have the function of a base station. In addition, words such as "uplink" and "downlink" may also be substituted with words corresponding to inter-terminal communication (for example, "side"). For example, an uplink channel, a downlink channel, or the like may be substituted with a side channel.

Similarly, the mobile station in the present disclosure may be read as a base station. In this case, the base station may have the function of the mobile station.

A radio frame may be composed of one or more frames in the time domain. Each of the one or more frames in the time domain may be referred to as a subframe.

A subframe may be further composed of one or more slots in the time domain. The subframe may be a fixed time length (for example, 1 ms) independent of the numerology.

The numerology may be a communication parameter applied to at least one of transmission and reception of a certain signal or channel. The numerology may indicate at least one of, for example, subcarrier spacing (SCS), bandwidth, symbol length, cyclic prefix length, transmission time interval (TTI), the number of symbols per TTI, radio frame configuration, a specific filtering process performed by a transceiver in the frequency domain, a specific windowing process performed by a transceiver in the time domain, and the like.

A slot may be composed of one or more symbols (Orthogonal Frequency Division Multiplexing (OFDM)) symbols, Single Carrier Frequency Division Multiple Access (SC-FDMA) symbols, and the like) in the time domain. A slot may be a unit of time based on the numerology.

A slot may include a plurality of minislots. Each minislot may be composed of one or more symbols in the time domain. A minislot may be called a subslot. A minislot may be composed of fewer symbols than slots. A PDSCH (or PUSCH) transmitted in time units greater than the minislot may be referred to as a PDSCH (or PUSCH) mapping type A. A PDSCH (or PUSCH) transmitted using a minislot may be referred to as a PDSCH (or PUSCH) mapping type B.

Each of a radio frame, subframe, slot, minislot, and symbol represents a time unit for transmitting a signal. A radio frame, subframe, slot, minislot, and symbol may have respectively different names corresponding to them.

For example, one subframe may be called a transmission time interval (TTI), a plurality of consecutive subframes may be called a TTI, and one slot or one minislot may be called a TTI. That is, at least one of the subframe and TTI may be a subframe (1 ms) in the existing LTE, a period shorter than 1 ms (for example, 1-13 symbols), or a period longer than 1 ms. Note that, a unit representing TTI may be called a slot, a minislot, or the like instead of a subframe.

Here, a TTI refers to the minimum time unit of scheduling in radio communication, for example. For example, in the LTE system, the base station performs scheduling for allocating radio resources (frequency bandwidth, transmission power, and the like that can be used in each user terminal) to each user terminal in units of TTI. The definition of TTI is not limited to this.

A TTI may be a transmission time unit such as a channel-encoded data packet (transport block), a code block, or a code word, or may be a processing unit such as scheduling or link adaptation. When a TTI is given, a time interval (for example, the number of symbols) in which a transport block, a code block, a code word, and the like are actually mapped may be shorter than TTI.

When one slot or one minislot is called a TTI, one or more TTIs (that is, one or more slots or one or more minislots) may be the minimum time unit of the scheduling. The number of slots (minislot number) constituting the minimum time unit of the scheduling may be controlled.

A TTI having a time length of 1 ms may be referred to as an ordinary TTI (TTI in LTE Rel. 8-12), a normal TTI, a long TTI, an ordinary subframe, a normal subframe, a long subframe, a slot, and the like. A TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, and the like) may be read as a TTI having a time length exceeding 1 ms, and a short TTI (for example, shortened TTI) may be read as a TTI having a TTI length of less than a TTI length of a long TTI and a TTI length of 1 ms or more.

A resource block (RB) is a resource allocation unit in the time domain and the frequency domain, and may include one or more consecutive subcarriers in the frequency domain. The number of subcarriers included in the RB may be the same regardless of the numerology, and may be 12, for example. The number of subcarriers included in the RB may be determined based on the numerology.

Further, the time domain of an RB may include one or more symbols, and may have a length of 1 slot, 1 minislot, 1 subframe, or 1 TTI. Each TTI, subframe, or the like may be composed of one or more resource blocks.

Note that, one or more RBs may be called a physical resource block (PRB), a sub-carrier group (SCG), a resource element group (REG), a PRB pair, a RB pair, and the like.

A resource block may be configured by one or more resource elements (REs). For example, one RE may be a radio resource domain of one subcarrier and one symbol.

A bandwidth part (BWP) (which may be called a partial bandwidth or the like) may represent a subset of consecutive common resource blocks (RBs) for a certain numerology in a certain carrier. Here, the common RB may be specified by an index of the RB based on the common reference point of the carrier. A PRB may be defined in a certain BWP and numbered within that BWP.

A BWP may include a BWP for UL (UL BWP) and a BWP for DL (DL BWP). One or more BWPs may be configured in one carrier for the UE.

At least one of the configured BWPs may be active, and the UE does not have to expect to transmit and receive predetermined signals/channels outside the active BWP. Note that "cell", "carrier", and the like in this disclosure may be read as "BWP".

The above-described structures such as a radio frame, a subframe, a slot, a minislot, and a symbol are merely examples. For example, structures such as the number of subframes included in a radio frame, the number of slots per subframe or radio frame, the number of minislots included in a slot, the number of symbols and RBs included in a slot or minislot, the number of subcarriers included in RBs, and the number of symbols included in a TTI, a symbol length, the cyclic prefix (CP) length, and the like can be changed in various manner.

The terms "connected", "coupled", or any variations thereof mean any direct or indirect connection or coupling between two or more elements, and can include that one or more intermediate elements are present between two elements that are "connected" or "coupled" to each other. The coupling or connection between the elements may be physical, logical, or a combination thereof. For example, "connection" may be substituted with "access". In the present disclosure, two elements can be "connected" or "coupled" to each other by using at least one of one or more wires, one or more cables, and one or more printed electrical connections, and as some non-limiting and non-exhaustive examples, by using electromagnetic energy having wavelengths in the radio frequency domain, a microwave region, and a light (both visible and invisible) region, and the like.

A reference signal may be abbreviated as RS and may be called a pilot according to applicable standards.

As used in the present disclosure, the phrase "based on" does not mean "based only on" unless explicitly stated otherwise. In other words, the phrase "based on" means both "based only on" and "based at least on".

"Means" in the configuration of each device above may be replaced with "unit", "circuit", "device", and the like.

Any reference to elements using a designation such as "first", "second", or the like used in the present disclosure generally does not limit the amount or order of those elements. Such designations can be used in the present disclosure as a convenient method to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive-OR.

Throughout the present disclosure, for example, during translation, if articles such as a, an, and the in English are added, the present disclosure may include that a noun following these articles is used in plural.

As used in this disclosure, the term "determining" may encompass a wide variety of actions. "determining" includes deeming that determining has been performed by, for example, judging, calculating, computing, processing, deriving, investigating, searching (looking up, search, inquiry) (for example, searching in a table, database, or another data structure), ascertaining, and the like. In addition, "determining" can include deeming that determining has been performed by receiving (for example, receiving information), transmitting (for example, transmitting information), inputting (input), outputting (output), access (accessing) (for example, accessing data in a memory), and the like. In addition, "determining" can include deeming that determining has been performed by resolving, selecting, choosing, establishing, comparing, and the like. That is, "determining" may include deeming that "determining" regarding some action has been performed. Moreover, "determining" may be read as "assuming", "expecting", "considering", and the like.

In the present disclosure, the wording "A and B are different" may mean "A and B are different from each other". It should be noted that the wording may mean "A and B are each different from C". Terms such as "separate", "couple", or the like may also be interpreted in the same manner as "different".

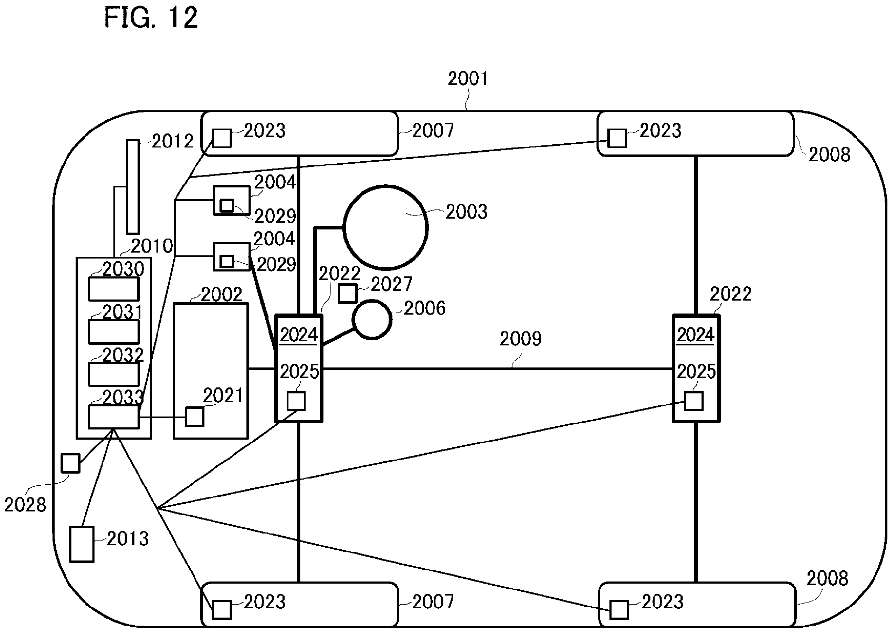

FIG. 12 illustrates a configuration example of a vehicle 2001. As illustrated in FIG. 12, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 includes, for example, an engine, a motor, and a hybrid of an engine and a motor.

The steering unit 2003 includes at least a steering wheel (which may be called handle), and is configured to steer at least one of front wheels and rear wheels, based on the operation of the steering wheel operated by a user.

The electronic control unit 2010 includes a microprocessor 2031, a memory (ROM, RAM) 2032, and a communication port (IO port) 2033. Signals from various sensors 2021 to 2027 provided in the vehicle are input to the electronic control unit 2010. The electronic control unit 2010 may be called an ECU (Electronic Control Unit).

The signals from the various sensors 2021 to 2028 include a current signal from a current sensor 2021 for sensing the current of a motor, a rotation speed signal of front wheels and rear wheels acquired by a rotation speed sensor 2022, a pressure signal of front wheels and rear wheels acquired by an air pressure sensor 2023, a vehicle speed signal acquired by a vehicle speed sensor 2024, an acceleration signal acquired by an acceleration sensor 2025, an accelerator pedal depression amount signal acquired by an accelerator pedal sensor 2029, a brake pedal depression amount signal acquired by a brake pedal sensor 2026, an operation signal of a shift lever acquired by a shift lever sensor 2027, and a detection signal, which is acquired by an object detection sensor 2028, for detecting obstacles, vehicles, pedestrians, and the like.

The information service unit 2012 includes: various devices such as a car navigation system, an audio system, a speaker, a television, and a radio for providing various information such as driving information, traffic information, and entertainment information; and one or more ECUs for controlling these devices. The information service unit 2012 provides various multimedia information and multimedia services to the occupants of the vehicle 1 by using information acquired from an external device via a communication module 2013 or the like.

A driving support system unit 2030 includes various devices for providing functions to prevent accidents or reduce the driver's driving load, such as a millimeter wave radar, light detection and ranging (LiDAR), a camera, a positioning locator (for example, GNSS, or the like), map information (for example, high-definition (HD) maps, autonomous vehicle (AV) maps, or the like), a gyroscopic system (for example, inertial measurement unit (IMU), inertial navigation system (INS), or the like), an artificial intelligence (AI) chip, an AI processor, or the like; and one or more ECUs for controlling these devices. In addition, the driving support system unit 2030 transmits and receives various kinds of information via the communication module 2013 to realize a driving support function or an automatic driving function.

The communication module 2013 can communicate with the microprocessor 2031 and elements of the vehicle 1 via the communication port. For example, the communication module 2013 transmits and receives data via the communication port 2033 to and from the drive unit 2002, the steering unit 2003, the accelerator pedal 2004, the brake pedal 2005, the shift lever 2006, the right and left front wheels 2007, the right and left rear wheels 2008, the axle 2009, the microprocessor 2031 and the memory (ROM, RAM) 2032 in the electronic control unit 2010, and the sensors 2021 to 2028, all of which are provided in the vehicle 2001.

The communication module 2013 is a communication device that can be controlled by the microprocessor 2031 of the electronic control unit 2010, and can communicate with an external device. For example, the communication module 2013 transmits and receives various kinds of information to and from the external device by means of radio communication. The communication module 2013 may be provided inside or outside the electronic control unit 2010. The external device may be, for example, a base station, a mobile station, or the like.

The communication module 2013 transmits a current signal from a current sensor, which is input to the electronic control unit 2010, to an external device by means of radio communication. In addition, the communication module 2013 transmits to an external device by means of radio communication, a rotation speed signal of the front and rear wheels acquired by the rotation speed sensor 2022, an air pressure signal of the front and rear wheels acquired by the air pressure sensor 2023, a vehicle speed signal acquired by the vehicle speed sensor 2024, an acceleration signal acquired by the acceleration sensor 2025, an accelerator pedal depression amount signal acquired by the accelerator pedal sensor 2029, a brake pedal depression amount signal acquired by the brake pedal sensor 2026, a shift lever operation signal acquired by the shift lever sensor 2027, and a detection signal, which is acquired by the object detection sensor 2028, for detecting obstacles, vehicles, pedestrians, and the like. These signals are input to the electronic control unit 2010.

The communication module 2013 receives various pieces of information (traffic information, signal information, inter-vehicle information, and the like) transmitted from an external device, and displays them on the information service unit 2012 provided in the vehicle. The communication module 2013 also stores various pieces of information received from the external device in the memory 2032 usable by the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021 to 2028, and the like, all of which are provided in the vehicle 2001.

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

- 10: Radio communication system
- 20: NG-RAN
- 100: gNB
- 110: Reception unit
- 120: Transmission unit
- 130: Control unit
- 200: UE
- 210: Radio signal transmission and reception unit
- 220: Amplifier unit
- 230: Modulation and demodulation unit
- 240: Control signal and reference signal processing unit
- 250: Encoding/decoding unit
- 260: Data transmission and reception unit
- 270: Control unit
- 1001: Processor
- 1002: Memory
- 1003: Storage
- 1004: Communication device
- 1005: Input device
- 1006: Output device
- 1007: Bus
- 2001: Vehicle
- 2002: Drive unit
- 2003: Steering unit
- 2004: Accelerator pedal
- 2005: Brake pedal
- 2006: Shift lever
- 2007: Left and right front wheels
- 2008: Left and right rear wheels
- 2009: Axle
- 2010: Electronic control unit
- 2012: Information service unit
- 2013: Communication module
- 2021: Current sensor
- 2022: Rotation speed sensor
- 2023: Air pressure sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Operation support system unit
- 2031: Microprocessor
- 2032: Memory (ROM, RAM)
- 2033: Communication port

## Claims

1. A terminal comprising:
a reception unit that receives a sequence regarding data delivery to a plurality of terminals; and
a control unit that generates, when a specific condition is satisfied, on the basis of a specific parameter included in broadcast information, a specific sequence to be applied to the sequence.

2. The terminal according to claim 1, wherein the specific condition includes a condition for receiving the sequence in an idle or inactive state.

3. The terminal according to claim 1 or 2, wherein the specific condition includes a condition where the sequence is related to a specific channel regarding data delivery to the plurality of terminals.

4. The terminal according to any one of claims 1 to 3, wherein the sequence includes one or more sequences selected from: a sequence regarding control information to be used in data delivery to the plurality of terminals; a sequence regarding data to be delivered in data delivery to the plurality of terminals; a sequence regarding a reference signal to be used in demodulation of the control information; and a sequence regarding a reference signal to be used in demodulation of the data.

5. A base station comprising:
a transmission unit that transmits a sequence regarding data delivery to a plurality of terminals; and
a control unit that assumes that a specific sequence to be applied to the sequence is generated, when a specific condition is satisfied, on the basis of a specific parameter included in broadcast information, at each of the plurality of terminals.

6. A radio communication method comprising:
a step of receiving a sequence regarding data delivery to a plurality of terminals; and
a step of generating, when a specific condition is satisfied, on the basis of a specific parameter included in broadcast information, a specific sequence to be applied to the sequence.
